(19) Europäisches Patentamt / European Patent Office / Office européen des brevets

(11) **EP 1 502 775 B1**

(12) **FASCICULE DE BREVET EUROPEEN**

(45) Date de publication et mention de la délivrance du brevet:
**23.09.2009 Bulletin 2009/39**

(51) Int Cl.:
***B60C 23/06*** *(2006.01)*

(21) Numéro de dépôt: **04291771.6**

(22) Date de dépôt: **12.07.2004**

(54) **Méthode d'évaluation de la pression des pneumatiques, et véhicule automobile équipé d'un dispositif de surveillance de la pression apte à la mettre en oeuvre**

Verfahren zum Abschätzen des Reifendrucks und Fahrzeug ausgestattet mit einem Drucküberwachungssystem, das dieses Verfahren anwendet

Method for evaluating the tyres pressure and vehicle having a pressure monitoring device able to apply such a method

(84) Etats contractants désignés:
**AT BE BG CH CY CZ DE DK EE ES FI FR GB GR HU IE IT LI LU MC NL PL PT RO SE SI SK TR**

(30) Priorité: **31.07.2003 FR 0309448**

(43) Date de publication de la demande:
**02.02.2005 Bulletin 2005/05**

(73) Titulaire: **Peugeot Citroën Automobiles S.A.**
**78140 Vélizy Villacoublay (FR)**

(72) Inventeurs:
- **Gouriet, Pascal**
  **92320 Chatillon (FR)**
- **Djama, Zahir**
  **75015 Paris (FR)**

(56) Documents cités:
**DE-A- 2 905 931      DE-A- 3 937 403**
**DE-A- 19 723 037      US-A- 5 412 584**
**US-A- 6 060 984**

**Description**

L'invention concerne en général l'industrie automobile et les méthodes d'évaluation de la pression des pneumatiques de véhicules automobiles.

Plus précisément, l'invention concerne selon un premier aspect une méthode d'évaluation de la pression d'au moins un pneu monté sur une roue d'un véhicule automobile, ce véhicule comprenant au moins une caisse, la roue étant liée à la caisse par une suspension.

Des méthodes d'évaluation de la pression sont connues de l'art antérieur, notamment par mesure directe, ou par mesure indirecte à l'aide du dispositif antiblocage des roues (ABS).

La mesure directe est coûteuse et peu fiable, elle entraîne l'apparition de nombreuses fausses alertes.

La méthode indirecte dite "ABS" repose sur la détection de la variation de la circonférence de roulement du pneu avec la pression. Elle est complexe et difficile à mettre au point car de nombreux paramètres doivent être pris en compte selon le type de pneu et le type de véhicule, notamment la charge du véhicule.

Une autre méthode repose sur l'estimation de la raideur verticale du pneu pour determiner la pression du pneu. Une telle méthode est décrite dans le document DE 40 09 540 A.

Toutefois cette méthode manque de précision.

Dans ce contexte, la présente invention a pour but de proposer une autre méthode ne présentant pas les défauts mentionnés ci-dessus.

A cette fin, la présente invention a pour objet une méthode d'évaluation de la pression d'au moins un pneu monté sur une roue d'un véhicule automobile, la dite méthode étant conforme à l'objet de la revendication 1.

De préférence, la méthode est adaptée à un véhicule comprenant au moins des premier et second pneus montés sur des première et seconde roues alignées l'une derrière l'autre, et l'étape 1/ comprend au moins les sous-étapes suivantes :

11/ mesure de la première accélération verticale au centre de la première roue ;

12/ estimation de l'altitude du sol sous la première roue à partir de la première accélération verticale mesurée à l'étape 11/ ;

13/ estimation de la seconde accélération verticale au centre de la seconde roue à partir de l'altitude du sol sous la première roue estimée à l'étape 12/ ;

14/ mesure de la seconde accélération verticale au centre de la seconde roue ;

15/ estimation de la seconde raideur verticale du second pneu par réconciliation de l'estimation de la seconde accélération verticale obtenue à la sous-étape 13/ et de la mesure de la seconde accélération verticale obtenue à la sous-étape 14/.

Par exemple, la réconciliation de la sous-étape 15/ est effectuée en échantillonnant avec une période prédéterminée l'estimation de la seconde accélération verticale et la mesure de la seconde accélération verticale, en calculant les fonctions d'auto-corrélation de l'estimation de la seconde accélération verticale et de la mesure de la seconde accélération verticale sur une durée d'observation glissante prédéterminée, et en déterminant pour chaque période la valeur de la seconde raideur verticale qui permet de minimiser l'écart entre les deux fonctions d'auto-corrélation .

Avantageusement, la première étape 1/ comprend une sous-étape 12'/ de temporisation entre les sous-étapes 12/ et 13/.

De préférence, la première étape 1/ comprend en outre les sous-étapes suivantes :

16/ estimation de l'altitude du sol sous la seconde roue à partir de la seconde accélération verticale au centre de la seconde roue mesurée à l'étape 14/ ;

17/ estimation de la première accélération verticale au centre de la première roue à partir de l'altitude du sol sous la seconde roue estimée à l'étape 16/ ;

18/ estimation de la première raideur verticale du premier pneu par réconciliation de l'estimation de la première accélération verticale obtenue à la sous-étape 17/ et de la mesure de la première accélération verticale obtenue à la sous-étape 11/.

Par exemple, l'estimation de la première raideur verticale obtenue à la sous-étape 18/ est utilisée à la sous-étape 12/, l'estimation de 1a seconde raideur verticale obtenue à la sous-étape 15/ étant utilisée à la sous-étape 16/.

Avantageusement, les sous-étapes 12/, 13/, 16/ et 17/ sont effectuées à l'aide d'un modèle linéaire ou non linéaire à deux degrés de liberté modélisant les interactions entre le sol, la roue et la caisse du véhicule.

De préférence, le véhicule automobile comprend au moins une autre roue, la raideur verticale du pneu étant estimée sans utiliser de grandeurs caractérisant le comportement de la ou des autres roues.

Par exemple, l'étape 1/ comprend au moins les sous-étapes suivantes :

111/ mesure de l'accélération verticale au centre de la roue,

112/ estimation du profil d'altitude du sol le long de la trajectoire de la roue à partir de l'accélération verticale au centre de la roue mesurée à la sous-étape 111/,

113/ estimation de l'altitude roue au centre de la roue à partir de l'accélération verticale au centre de la roue mesurée à la sous-étape 111/,

114/ estimation de l'effort du pneu à partir de l'accélération verticale au centre de la roue mesurée à la sous-étape 111/,

115/ estimation de la raideur verticale du pneu à partir du profil d'altitude du sol estimé à l'étape 112/, de l'altitude roue estimée à l'étape 113/ et de l'effort pneu estimé à la sous-étape 114/.

Avantageusement, la raideur verticale estimée à la sous-étape 115/ est utilisée à la sous-étape 112/.

De préférence, les sous-étapes 112/, 113/, 114/ et 115/ sont effectuées à l'aide d'un modèle linéaire ou non linéaire à deux degrés de liberté modélisant les interactions entre le sol, la roue et la caisse du véhicule.

Par exemple, le profil d'altitude du sol est estimé également à partir de l'accélération verticale caisse de la caisse, cette accélération verticale caisse étant mesurée.

Avantageusement, le profil d'altitude du sol est estimé également à partir de l'accélération verticale caisse de la caisse, cette accélération verticale caisse étant estimée à partir de l'accélération verticale au centre de la roue.

Par exemple, la méthode comprend une sous-étape 116/ d'estimation de l'accélération verticale caisse à partir de l'accélération verticale roue, à l'aide de tables et/ou de cartographies prédéterminées caractérisant le comportement de la suspension.

De préférence, la raideur verticale du pneu est estimée à partir de la mesure du débattement relatif roue - caisse, et/ou de la vitesse de débattement relatif roue - caisse.

Par exemple, la méthode est adaptée à un véhicule comprenant au moins des premier et second pneus montés sur des première et seconde roues alignées l'une derrière l'autre, et l'étape 1/ comprend au moins les sous-étapes suivantes :

211/ mesures de la première accélération verticale au centre de la première roue à une pluralité d'instants successifs ;

212/ calcul d'une première fonction à partir des mesures effectuées à la sous-étape 211/,

213/ mesures de la seconde accélération verticale au centre de la seconde roue à une pluralité d'instants successifs ;

214/ calcul d'une seconde fonction à partir des mesures effectuées à la sous-étape 213/,

215/ estimation de la variation relative des raideurs verticales des premier et second pneus l'un par rapport à l'autre en fonction des résultats des calculs des étapes 212/ et 214/ à l'aide de tables et/ou de cartographies prédéterminées.

Avantageusement, la pression ou la différence de pression du pneu est estimée à l'étape 2/ également en fonction de la température ambiante et/ou de la vitesse du véhicule.

Selon un second aspect, l'invention concerne un véhicule automobile comprenant au moins un pneu, un dispositif de surveillance de la pression dudit pneu apte à mettre en oeuvre la méthode d'évaluation de la pression décrite plus haut, des moyens d'avertissement du conducteur activés par le dispositif de surveillance quand la pression du pneu sort d'une fourchette prédéterminée et/ou des moyens d'affichage de la pression du pneu.

Avantageusement, le véhicule comprend un dispositif de pilotage d'au moins un organe du véhicule, tel que la suspension ou le dispositif de freinage, ce dispositif pilotant ledit organe en fonction de la pression estimée par le dispositif de surveillance.

De préférence, le véhicule comprend un capteur d'angle du volant, le dispositif de surveillance de la pression étant inhibé quand l'angle du volant sort d'une plage prédéterminée.

Par exemple, le véhicule comprend un capteur d'accélération, le dispositif de surveillance de la pression étant inhibé quand l'accélération sort d'une plage prédéterminée.

D'autres caractéristiques et avantages de l'invention ressortiront clairement de la description qui en est faite ci-dessous, à titre indicatif et nullement limitatif, en référence aux figures annexées, parmi lesquelles :

-    la figure 1 est une représentation schématique du modèle mécanique utilisé dans la méthode de l'invention,

-    la figure 2 est une représentation schématique de l'algorithme général d'un premier mode de réalisation de la première étape de la méthode de l'invention,

-    les figures 3A à 3F sont des représentations schématiques des algorithmes des sous-étapes 116/, 112/, 114/, 113/ et 115/ de la figure 2, pour une première variante de réalisation mettant en jeu un modèle non linéaire de suspension,

-    les figures 4A et 4B sont des représentations schématiques des algorithmes des sous-étapes 116/ et 112/ de la figure 2, pour une seconde variante de réalisation mettant en jeu un modèle linéaire de suspension,

-    la figure 5 est une représentation schématique de l'algorithme général d'un second mode de réalisation de la première étape de la méthode de l'invention,

-    les figures 6A et 6B sont des représentations schématiques des algorithmes des sous-étapes 12/ et 13/ de la figure 5, pour une première variante de réalisation mettant en jeu un modèle non linéaire de suspension,
- les figures 7A et 7B sont des représentations schématiques des algorithmes des sous-étapes 12/ et 13/ de la figure 5, pour une seconde variante de réalisation mettant en jeu un modèle linéaire de suspension,
- la figure 8 est une représentation schématique de la sous-étape 15/ de la figure 5,
- la figure 9 est une représentation schématique d'une étape supplémentaire du second mode de réalisation permettant de tester la robustesse du modèle de calcul,
- la figure 10 est une représentation schématique de l'algorithme général d'un troisième mode de réalisation de la méthode de l'invention, et
- la figure 11 est une représentation schématique de la dernière étape du premier mode de réalisation de l'invention.

La méthode de l'invention repose sur la modélisation des interactions entre la caisse C du véhicule, ses roues R liées à la caisse C, et le sol.

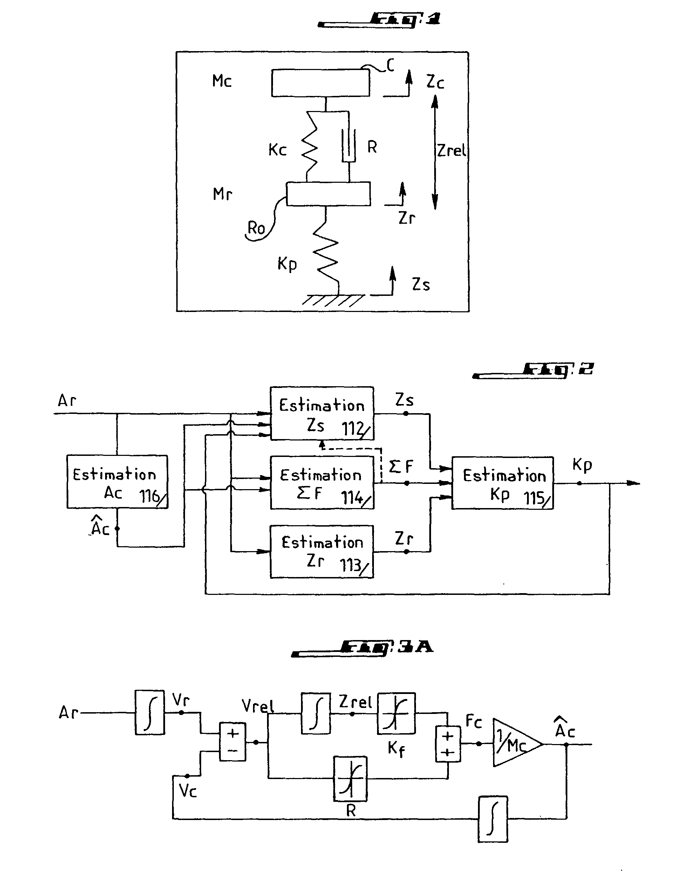

Comme le montre la figure 1, on utilise une modélisation à deux degrés de liberté, dans laquelle la caisse C est assimilée à une masse Mc suspendue à la roue $R_o$ de masse Mr par une suspension assimilée à un ensemble ressort/amortisseur, cet ensemble étant caractérisé par une raideur Kc et un coefficient d'amortissement R. La roue $R_o$ et la caisse C se déplacent selon une direction verticale et occupent des altitudes respectives Zr et Zc par rapport à un niveau de référence. Ce niveau de référence peut être par exemple l'altitude du sol au démarrage du véhicule.

Par ailleurs, la roue $R_o$ porte un pneu Pn reposant sur le sol, assimilé à un ressort de raideur verticale Kp.

Le comportement du système est commandé par l'évolution dans le temps de l'altitude Zs du sol par rapport audit niveau de référence, c'est-à-dire par le profil du sol parcouru par la roue.

La méthode de l'invention comprend les étapes suivantes :

1/ estimation de la raideur verticale dudit pneu ou de la variation de la raideur verticale Kp dudit pneu par rapport aux autres pneus du véhicule, à partir d'au moins une grandeur mesurée par au moins un capteur équipant le véhicule ;

2/ estimation de la pression ou de la variation de pression P dudit pneu à l'aide de tables et/ou de cartographies prédéterminées, bi- ou multidimensionnelles, donnant la pression ou la variation de pression du pneu en fonction de la raideur verticale ou de 1a variation de raideur verticale Kp du pneu estimée à l'étape 1/ et éventuellement d'autres paramètres.

L'invention repose sur le constat que la raideur verticale Kp du pneu est une signature de la pression P du pneu.

La raideur verticale Kp du pneu est principalement estimée à partir de l'accélération verticale Ar au centre de la roue $R_o$.

Cette accélération est mesurée directement par un capteur dédié, ou est estimée à partir d'une autre mesure, par exemple une mesure de la force verticale s'exerçant au centre de la roue $R_o$.

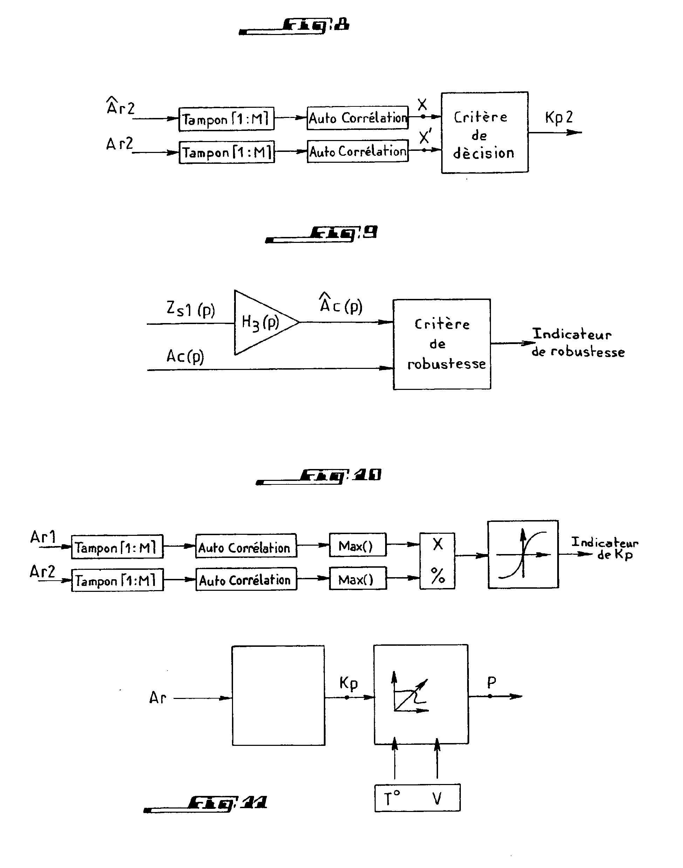

Comme le montre la figure 11, les cartes et les tabulations permettant de déterminer la pression P du pneu peuvent être paramétrées en fonction de la température ambiante T et/ou de la vitesse du véhicule V. Ces paramètres sont mesurés par d'autres capteurs. Ces cartes et tabulations sont déterminées par calcul en fonction des caractéristiques du véhicule et validées expérimentalement.

On va maintenant décrire trois modes de réalisation de l'invention permettant de déterminer la raideur verticale Kp du pneu à partir de l'accélération verticale au centre roue Ar, ce qui correspond à l'étape 1/ de la méthode.

Le premier mode de réalisation permet de déterminer cette raideur à partir de mesures effectuées sur la roue, complétées éventuellement par des mesures effectuées sur la caisse. Il ne fait pas appel à des mesures effectuées sur les autres roues du véhicule.

Le second mode de réalisation permet de déterminer conjointement les raideurs verticales Kp des deux roues disposées d'un même côté du véhicule, en utilisant des mesures effectuées sur les deux roues.

Le troisième mode de réalisation permet de détecter une variation relative des raideurs des deux roues disposées du même côté du véhicule l'une par rapport à l'autre, en utilisant des mesures effectuées sur les deux roues.

Dans toute la suite du document, les accélérations au centre roue sont notées Ar quand elles sont mesurées directement, et Âr quand elles sont estimées par calcul. Il en est de même pour l'accélération caisse mesurée Ac et estimée Âc.

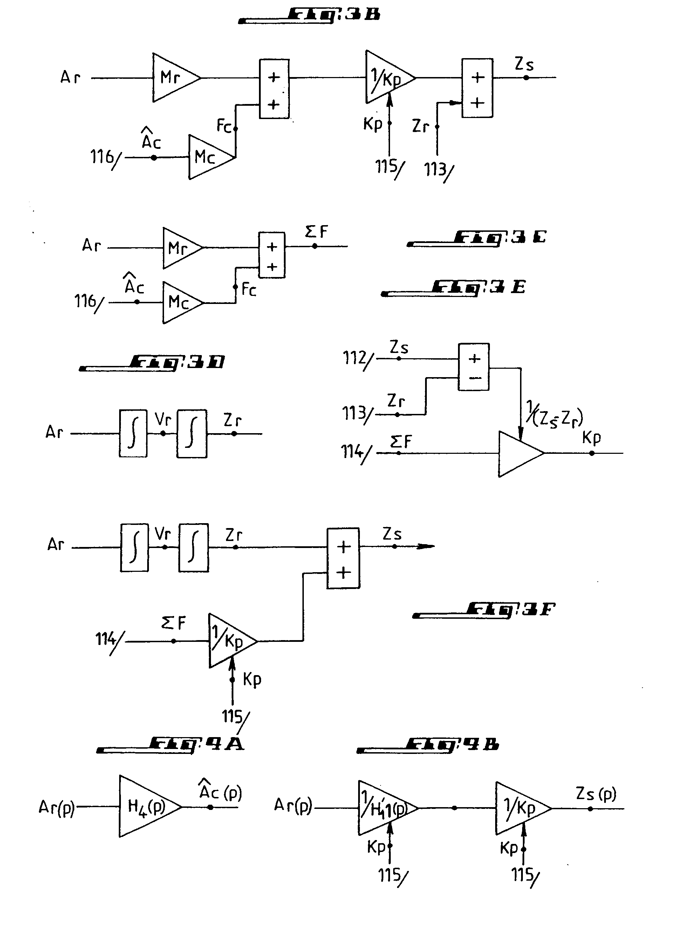

Le premier mode de réalisation est illustré sur les figures 2 à 4A/B. Comme le montre la figure 2, l'étape 1/ de la méthode comprend les sous-étapes suivantes :

111/ mesure de l'accélération verticale Ar au centre de la roue $R_o$,
116/ estimation de l'accélération verticale Âc de la caisse C à partir de l'accélération verticale Ar au centre de la roue $R_o$ mesurée à la sous-étape 111/,
112/ estimation du profil d'altitude du sol Zs le long de la trajectoire de la roue à partir de l'accélération verticale Ar

au centre de la roue $R_o$ mesurée à la sous-étape 111/ et de l'accélération verticale Âc de la caisse C estimée à la sous-étape 116/,

113/ estimation de l'altitude roue Zr au centre de la roue $R_o$ à partir de l'accélération verticale Ar au centre de la roue mesurée à la sous-étape 111/,

114/ estimation de l'effort vertical du pneu ΣF à partir de l'accélération verticale Ar au centre de la roue $R_o$ mesurée à la sous-étape 111/ et de l'accélération verticale Âc de la caisse C estimée à la sous-étape 116/,

115/ estimation de la raideur verticale Kp du pneu à partir du profil d'altitude Zs du sol estimé à l'étape 112/, de l'altitude roue Zr estimée à l'étape 113/ et de l'effort pneu ΣF estimé à la sous-étape 114/.

La raideur verticale Kp estimée à la sous-étape 115/ est utilisée comme donnée d'entrée pour l'itération suivante à la sous-étape 112/.

Les sous-étapes 112/, 113/, 114/, 115/ et 116/ sont effectuées dans une première variante de réalisation à l'aide d'un modèle de calcul non linéaire ou, dans une seconde variante de réalisation, à l'aide d'un modèle de calcul linéaire.

La première variante correspond aux figures 3A à 3E.

La figure 3A représente l'étape 116/qui vise à estimer l'accélération verticale Âc de la caisse en utilisant les équations suivantes :

$$\mathtt{Vr \;=\; \int Ar}$$

$$\mathtt{Vrel \;=\; Vr \;-\; Vc}$$

$$\mathtt{Zrel \;=\; \int Vrel}$$

$$\mathtt{Fc \;=\; Fk \;+\; Fr \;\; avec \;\; Fk \;=\; Kc \; x \; Zrel \;\; et \;\; Fr \;=\; R \; x \; Vrel}$$

$$\mathtt{Vc \;=\; \int Ac}$$

$$\mathtt{\hat{A}c \;=\; Fc/Mc}$$

On estime d'abord la vitesse verticale Vr au centre roue par intégration de l'accélération verticale Ar au centre roue mesurée à l'étape 111/, puis la vitesse de débattement relatif roue-caisse Vrel par différence entre la vitesse verticale au centre roue Vr déterminée précédemment et la vitesse verticale Vc de la caisse C.

On détermine ensuite l'effort de suspension Fc à partir de la vitesse de débattement relatif Vre1 à l'aide de tables, ou éventuellement de cartographies, prédéterminées caractérisant le comportement de la suspension. Cet effort est la somme de deux termes : l'effort du ressort Fk et l'effort d'amortissement Fr.

L'effort d'amortissement Fr est lu dans une table fournie par le constructeur de l'amortisseur, à partir de la vitesse de débattement relatif Vrel.

L'effort de ressort Fk est lu dans une table fournie par le constructeur de l'amortisseur, à partir du débattement relatif roue-caisse Zrel. A cet effet, on détermine ce débattement par intégration de la vitesse de débattement relatif Vrel.

L'accélération caisse Âc est déterminée simplement par division de l'effort de suspension Fc par la masse de la caisse Mc.

La vitesse verticale de la caisse Vc utilisée précédemment pour déterminer la vitesse de débattement relatif Vrel est obtenue par intégration de l'accélération caisse Âc obtenue à l'itération précédente.

L'étape 112/ est représentée sur la figure 3B. L'altitude du sol Zs est déterminée suivant l'équation :

$$\mathtt{Zs \;=\; (Mr \; x \; Ar \;+\; Fc) \;\; / \;\; Kp \;+\; Zr}$$

Ainsi, l'accélération verticale Ar au centre roue mesurée à la sous-étape 111/ est d'abord multipliée par la masse de la roue Mr. On estime par ailleurs l'effort de suspension Fc à partir de l'accélération verticale de la caisse Âc estimée à la sous-étape 116/ en multipliant celle-ci par la masse de la caisse Mc. On additionne ensuite ces deux termes et on divise la somme par la raideur verticale du pneu Kp fournie à la sous-étape 115/. On additionne le résultat ainsi obtenu à l'altitude roue Zr fournie par la sous-étape 113/ pour déterminer l'altitude du sol Zs.

Dans une variante de réalisation représentée sur la figure 3F, l'altitude du sol Zs est déterminée à la sous-étape 112/ suivant l'équation :

$$\text{Zs = Zr + } \Sigma\text{F/Kp}$$

L'accélération verticale Ar au centre roue mesurée à la sous-étape 111/ est intégrée deux fois pour obtenir l'altitude roue Zr. L'effort vertical du pneu obtenu à la sous-étape 114/ est divisé par la raideur verticale du pneu Kp fournie à la sous-étape 115, le résultat étant additionné à l'altitude roue Zr pour estimer l'altitude du sol Zs.

La figure 3C illustre la sous-étape 114/. L'effort vertical du pneu ΣF est déterminé en appliquant l'équation :

$$\Sigma\text{F = Mr x Ar + Mc x }\hat{\text{A}}\text{c}$$

On multiplie donc l'accélération verticale Ar au centre roue mesurée à la sous-étape 111/ par la masse de la roue Mr, et on additionne au résultat l'accélération verticale Âc de la caisse C estimée à la sous-étape 116/ multipliée par la masse de la caisse Mc.

La figure 3D représente la sous-étape 113/ qui vise à déterminer l'altitude du centre roue Zr à partir de l'équation suivante :

$$\text{Zr = } \iint \text{Ar}$$

On intègre donc deux fois l'accélération au centre roue Ar mesurée à la sous-étape 111/.

La figure 3E illustre la sous-étape 115/ qui vise à déterminer la raideur verticale Kp du pneu à partir de l'équation suivante :

$$\text{Kp = } \Sigma\text{F / (Zs - Zr)}$$

On effectue donc d'abord la différence entre l'altitude du sol Zs estimée à la sous-étape 112/ et l'altitude Zr au centre roue estimée à la sous-étape 113/. On divise ensuite l'effort pneu ΣF obtenu à la sous-étape 114/ par la différence déterminée précédemment.

La seconde variante de réalisation, correspondant au modèle de calcul linéaire, est représentée sur les figures 4A et 4B.

On utilise dans ce modèle les transformées de Laplace des différentes grandeurs mesurées ou estimées.

La figure 4A représente la sous-étape 116/ qui vise à déterminer l'accélération verticale Âc de la caisse à partir des équations :

$$\hat{\text{A}}\text{c(p) = H}_4\text{(p) x Ar(p)}$$

$$\text{H}_4\text{(p) = (R x p/Kc + 1) / (Mc x p}^2\text{/Kc + R x p/Kc +1)}$$

On multiplie donc simplement l'accélération verticale au centre roue Ar mesurée à l'étape 111/ par la valeur de $H_4$(p), qui est indépendante de la raideur verticale Kp du pneu.

La figure 4B représente la sous-étape 112/, qui vise à estimer l'altitude du sol Zs sous la roue à partir des équations suivantes :

$$Zs(p) = Ar / (H'1(p) \times Kp)$$

$$H'1(p) = (Mcp^4 + Rp^3 + Kcp^2) / (MrMcp^4 + R(Mc+Mr)p^3$$
$$+ MrKc + Mc(Kc+Kp)p^2 + RKpp + KcKp)$$

On divise donc l'accélération verticale au centre de la roue Ar mesurée à l'étape 111/ par la valeur de la fonction H'1(p), cette valeur étant estimée à partir de la raideur verticale du pneu Kp estimée à l'itération précédente de la sous-étape 115/. On divise ensuite le résultat obtenu par la valeur de la raideur verticale du pneu Kp estimée à l'itération précédente de la sous-étape 115/.

La sous-étape 113/, qui vise à déterminer l'altitude roue Zr(p), est réalisée très simplement en utilisant l'équation :

$$Zr(p) = Ar(p) / p^2$$

Ar est mesuré à la sous-étape 111/.

Les sous-étapes 114/ et 115/ sont effectuées de la même façon que dans la première variante de réalisation, en utilisant les mêmes équations.

Dans une variante possible de ce premier mode de réalisation, l'accélération verticale caisse Ac est mesurée directement à l'aide d'un capteur équipant le véhicule. La sous-étape 116/ décrite ci-dessus est donc remplacée par une simple étape de mesure. La valeur mesurée est ensuite employée aux sous-étapes 112/ et 114/.

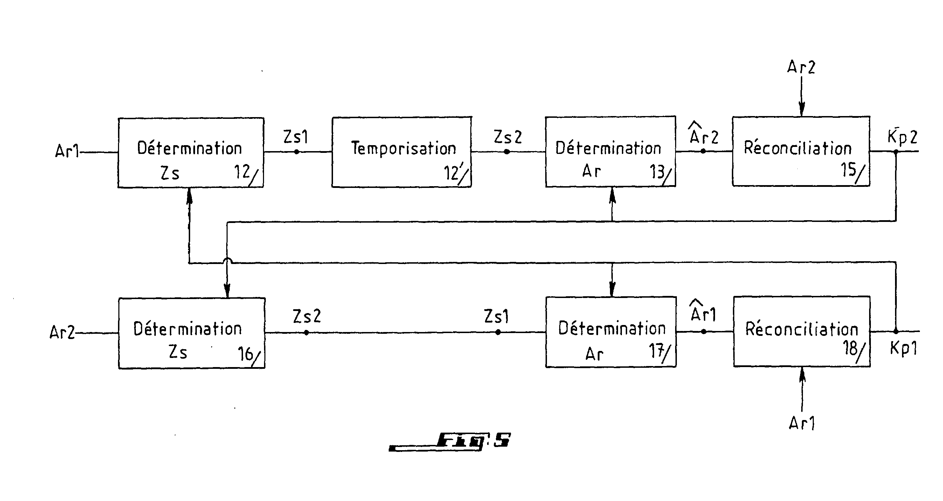

Un second mode de réalisation de l'invention est illustré sur les figures 5 à 9.

Il permet de déterminer conjointement les raideurs verticales Kp1 et Kp2 respectives de premier et second pneus Pn1 et Pn2 montés sur des première et seconde roues R1 et R2 alignées l'une derrière l'autre.

Ces roues sont typiquement respectivement les roues avant et arrière d'un même côté du véhicule automobile.

L'étape 1/ de la méthode est illustrée sur la figure 5 et comprend les sous-étapes suivantes :

11/ mesure de la première accélération verticale Ar1 au centre de la première roue R1 ;

12/ estimation de l'altitude du sol Zs1 sous la première roue R1 à partir de la première accélération verticale Ar1 mesurée à l'étape 11/ ;

13/ estimation de la seconde accélération verticale Âr2 au centre de la seconde roue R2 à partir de l'altitude du sol Zs1 sous la première roue estimée à l'étape 12/ ;

14/ mesure de la seconde accélération verticale Ar2 au centre de la seconde roue ;

15/ estimation de la seconde raideur verticale Kp2 du second pneu Pn2 par réconciliation de l'estimation de la seconde accélération verticale Âr2 obtenue à la sous-étape 13/ et de la mesure de la seconde accélération verticale Ar2 obtenue à la sous-étape 14/ ;

16/ estimation de l'altitude du sol Zs2 sous la seconde roue R2 à partir de la seconde accélération verticale Ar2 au centre de la seconde roue R2 mesurée à l'étape 14/ ;

17/ estimation de la première accélération verticale Âr1 au centre de la première roue R1 à partir de l'altitude du sol Zs2 sous la seconde roue R2 estimée à l'étape 16/ ;

18/ estimation de la première raideur verticale Kp1 du premier pneu Pn1 par réconciliation de l'estimation de la première accélération verticale Âr1 obtenue à la sous-étape 17/ et de la mesure de la première accélération verticale Ar1 obtenue à la sous-étape 11/.

L'estimation de la première raideur verticale Kp1 obtenue à la sous-étape 18/ est utilisée à la sous-étape 12/, et l'estimation de la seconde raideur verticale Kp2 obtenue à la sous-étape 15/ est utilisée à la sous-étape 16/.

Comme dans le premier mode de réalisation de l'invention, les sous-étapes 12/, 13/, 16/, et 17/ sont effectuées dans une première variante de réalisation à l'aide d'un modèle de calcul non linéaire ou, dans une seconde variante de réalisation, à l'aide d'un modèle de calcul linéaire.

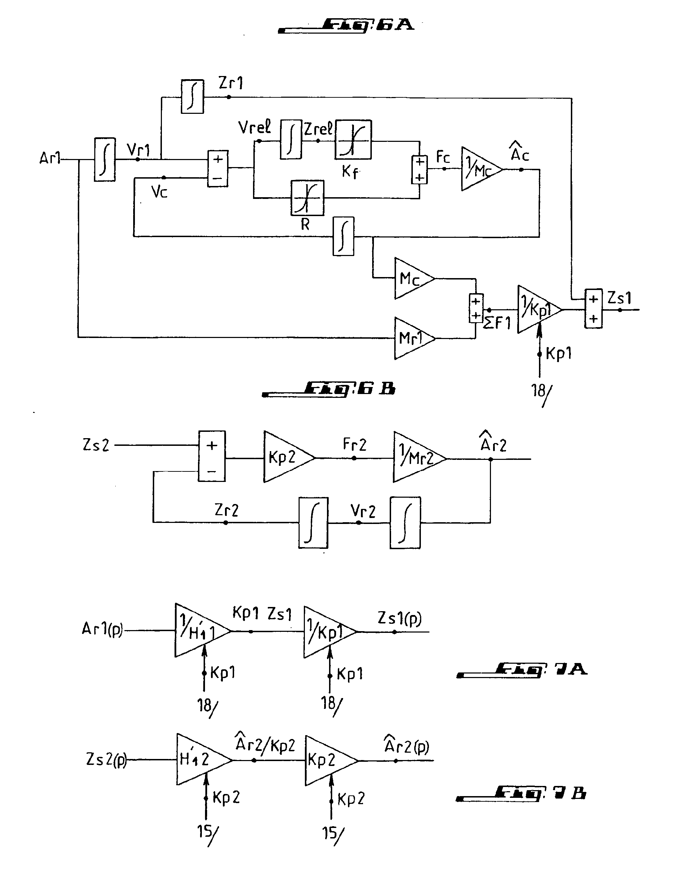

La première variante de réalisation correspond aux figures 6A et 6B. La figure 6A illustre la sous-étape 12/, qui vise à déterminer l'altitude du sol Zs1 sous la première roue R1, à l'aide des équations suivantes :

$$Vr1 = \int Ar1$$

$$Vrel1 = Vr1 - Vc$$

$$Zrel1 = \int Vrel1$$

$$Fc1 = Fk + Fr \quad avec \quad Fk = Kc \times Zrel1 \quad et \quad Fr = R \times Vrel1$$

$$Vc = \int Ac$$

$$Zr1 = \int Vr1$$

$$Zs1 = (Mr1 \times Ar1 + Fc) / Kp1 + Zr1$$

On estime d'abord la vitesse verticale Vr1 au centre de la première roue R1 par intégration de l'accélération verticale Ar1 au centre de la première roue R1 mesurée à la sous-étape 11/, puis la vitesse de débattement relatif première roue-caisse Vrel1 par différence entre la vitesse verticale Vr1 au centre de la première roue R1 déterminée précédemment et la vitesse verticale Vc de la caisse C.

On détermine ensuite le premier effort de suspension Fc1 à partir de la vitesse de débattement relatif Vrel1. Cet effort est la somme de deux termes : l'effort du ressort Fk et l'effort d'amortissement Fr.

L'effort d'amortissement Fr est lu dans une table fournie par le constructeur de l'amortisseur, à partir de la vitesse de débattement relatif Vrel1.

L'effort de ressort Fk est lu dans une table fournie par le constructeur de l'amortisseur, à partir du débattement relatif première roue-caisse Zrel1. A cet effet, on détermine ce débattement par intégration de la vitesse de débattement relatif Vrel1.

L'accélération caisse Âc est déterminée simplement par division du premier effort de suspension Fc1 par la masse de la caisse Mc.

La vitesse verticale de la caisse Vc utilisée précédemment pour déterminer la vitesse de débattement relatif Vrel1 est obtenue par intégration de l'accélération caisse Âc obtenue précédemment.

Par ailleurs, l'altitude de la première roue Zr1 est estimée en intégrant la vitesse verticale Vr1 de la première roue R1 déterminée précédemment.

L'accélération verticale Ar1 au centre de la première roue R1 mesurée à la sous-étape 11/ est multipliée par la masse Mr1 de la première roue R1 et additionnée à l'accélération de la caisse Âc estimée plus haut, elle-même multipliée par la masse de la caisse Mc. Le résultat obtenu est divisé par la première raideur verticale Kp1 du premier pneu Pn1 estimée à la sous-étape 18/. On additionne le résultat ainsi obtenu à l'altitude Zr1 de la première roue R1 déterminée précédemment pour obtenir l'altitude du sol Zs1 sous la première roue R1.

On assimile l'altitude du sol Zs2 sous la seconde roue R2 à l'altitude du sol Zs1 sous la première roue R1 pour effectuer la sous-étape 13/, illustrée sur la figure 6B.

Cette sous-étape vise à estimer la seconde accélération verticale Âr2 en utilisant les équations suivantes :

$$\hat{A}r2 \times Mr2 = Kp2 \times (Zs2 - Zr2)$$

$$Zr2 = \iint \hat{A}r2$$

On effectue ainsi la différence entre l'altitude du sol Zs2 sous la seconde roue R2 déterminée à la sous-étape 12/ et l'altitude Zr2 au centre de la seconde roue R2, et on multiplie cette différence par la seconde raideur verticale Kp2 estimée à la sous-étape 15/. On divise le résultat par la masse Mr2 de la seconde roue R2 pour obtenir l'estimation de la seconde accélération verticale Âr2.

Par ailleurs, on estime l'altitude Zr2 au centre de la seconde roue en intégrant deux fois la seconde accélération verticale Âr2 estimée précédemment.

La réconciliation de la sous-étape 15/ est effectuée selon l'algorithme de la figure 8, en échantillonnant avec une période prédéterminée T l'estimation de la seconde accélération verticale Âr2 et la mesure de la seconde accélération verticale Ar2, en plaçant ces valeurs dans une mémoire tampon, en calculant les fonctions d'auto-corrélation, respectivement X et X', de l'estimation de la seconde accélération verticale Âr2 et de la mesure de la seconde accélération verticale Ar2 sur une durée d'observation glissante prédéterminée D, et en déterminant pour chaque période la valeur de la seconde raideur verticale Kp2 qui permet de minimiser l'écart entre les deux fonctions d'auto-corrélation X et X'.

La durée d'observation D est typiquement choisie égale à M x T, avec M entier.

A chaque période, on calcule donc l'auto-corrélation X à l'aide des M dernières valeurs Âr2(1) à Âr2(M) mises en mémoire, suivant l'équation :

$$X = \Sigma_{i = 1 \text{ à } M} \; \hat{A}r2(i) \; x \; \hat{A}r2(M-i)$$

On calcule X' de la même façon :

$$X' = \Sigma_{i = 1 \text{ à } M} \; Ar2(i) \; x \; Ar2(M-i)$$

Le critère de décision permettant de déterminer la seconde raideur verticale Kp2 est de minimiser l'écart entre les deux courbes constituées par les valeurs successives des auto-corrélations X et X', par exemple au sens des moindre carrés.

On notera que l'auto-corrélation est la même pour un signal et pour ce signal décalé dans le temps.

Cette propriété permet d'assimiler l'altitude du sol Zs2 sous la seconde roue R2 à l'altitude du sol Zs1 sous la première roue R1 pour effectuer la sous-étape 13/, puisque les deux roues sont disposées l'une derrière l'autre. La seconde roue, disposée derrière la première, « verra » le même profil du sol que la première roue, avec un décalage dans le temps constant.

Les sous-étapes 16/, 17/ et 18/ sont similaires aux sous-étapes 12/, 13/ et 15/ et ne seront pas décrites ici.

Le modèle linéaire correspond aux figures 7A et 7B.

La sous-étape 12/ est réalisée en utilisant les équations suivantes :

$$Zs1(p) = Ar1(p) \; / \; (Kp1 \; x \; H'11(p))$$

$$H'11(p) = (Mcp^4 + R1p^3 + Kc1p^2) \; / \; (Mr1Mcp^4 + R1(Mc+Mr1)p^3 + Mr1Kc1 + Mc(Kc1+Kp1)p^2 + R1Kp1p + Kc1Kp1)$$

On divise donc la première accélération verticale Ar1 au centre roue R1 mesurée à l'étape 11/ par la valeur de la fonction H'11(p), cette valeur étant estimée à partir de la première raideur verticale Kp1 estimée à la sous-étape 18/. On divise ensuite le résultat obtenu par la valeur de la première raideur verticale Kp1 estimée à la sous-étape 18/.

La sous-étape 13/ est réalisée tout simplement en inversant la première équation utilisée à la sous-étape 12/ :

$$\hat{A}r2(p) = Zs2(p) \; x \; (Kp2 \; x \; H'12(p))$$

$$H'12(p) = (Mcp^4 + R2p^3 + Kc2p^2) \; / \; (Mr2Mcp^4 + R2(Mc+Mr2)p^3 + Mr2Kc2 + Mc(Kc2+Kp2)p^2 + R2Kp2p + Kc2Kp2)$$

On multiplie donc l'altitude du sol Zs2 sous la roue R2 estimée à la sous-étape 12/ par la valeur de la fonction H'12(p), cette valeur étant estimée à partir de la seconde raideur verticale Kp2 estimée la sous-étape 15/. On multiplie ensuite le résultat obtenu par la valeur de la seconde raideur verticale Kp2 estimée à la sous-étape 15/.

La sous-étape 15/ est similaire à celle de la première variante de réalisation et ne sera pas décrite en détail.

Comme dans la première variante de réalisation, les sous-étapes 16/ à 18/ sont similaires aux sous-étapes 12/, 13/ et 15/.

Dans une variante possible, les sous-étapes 12/ et 16/ sont exécutées non pas avec les valeurs respectivement des seconde et première raideurs verticales Kp2 et Kp1 estimées aux sous-étapes 18/ et 15/, mais avec des valeurs constantes prédéterminées. Cette variante permet de simplifier l'algorithme de calcul en évitant des rebouclages.

Par ailleurs, l'étape 1/ peut comprendre une sous-étape 12'/ de temporisation entre les sous-étapes 12/ et 13/. Cette temporisation correspond au décalage temporel avec lequel le profil du sol « vu » par la première roue arrive sous la seconde roue, située derrière la première.

Dans encore une variante possible, l'accélération verticale caisse Ac est mesurée directement à l'aide d'un capteur équipant le véhicule. Les sous-étapes 12/ et 16/ décrites ci-dessus peuvent alors être considérablement simplifiées dans la première variante de réalisation correspondant au modèle non linéaire.

Dans encore une autre variante de l'invention, la méthode ne comprend que les sous-étapes 11/ à 15/, les sous-étapes 16/ à 18/ étant exclues. Seule la seconde raideur verticale 12 peut être déterminée dans ce cas.

La mesure de l'accélération verticale caisse Ac peut également être exploitée pour tester la robustesse des calculs effectués et confirmer les estimations des première et seconde raideurs verticales Kp1 et Kp2 obtenues.

La figure 9 représente un exemple d'utilisation de la mesure de l'accélération verticale caisse Ac dans ce but, dans le cadre de la seconde variante de réalisation correspondant au modèle linéaire.

On calcule à partir de l'estimation de l'altitude du sol sous la première roue Zs1 une estimation de l'accélération verticale caisse Âc, à l'aide de l'équation :

$$\hat{A}c = H_31(p) \times Zs1 \text{ avec}$$

$$H_31(p) = (R1p^3/Kc1 + p^2) / (Mr1Mcp^4/Kp1Kc1 + R1(Mc+Mr1)p^3/Kp1Kc1 + (Mr1/Kp1+Mc/Kc1+Mc/Kp1)p^2 + R1p/Kc1 +1)$$

On compare ensuite l'estimation de l'accélération verticale caisse Âc obtenue avec la mesure de l'accélération verticale caisse Ac, en appliquant un critère de robustesse de type connu, pour évaluer un indicateur de robustesse.

Cette utilisation peut être transposée par l'homme du métier à la première variante de réalisation, correspondant au modèle non linéaire.

Enfin, on peut souligner que la réconciliation mise en oeuvre aux sous-étapes 15/ et 18/ peut être réalisée en remplaçant le calcul de la fonction d'auto-corrélation des accélérations verticales au centre roue mesurées (Ar1, Ar2) et estimées (Âr1, Âr2) par le calcul d'une autre fonction, comme la covariance, la densité spectrale de puissance ou la transformée de Fourrier.

Le troisième mode de réalisation de l'invention est représenté sur la figure 10. Il vise à détecter une dérive relative des pressions respectives des premier et second pneus l'un par rapport à l'autre. Les premier et second pneus sont, par exemple, respectivement les pneus avant et arrière disposés d'un même côté du véhicule.

Il ne vise donc pas, comme les premier et second modes de réalisation, à déterminer la pression des pneus de façon absolue, mais au contraire une variation de cette pression par rapport à une référence.

L'étape 1/ comprend les sous-étapes suivantes :

211/ mesures de la première accélération verticale Ar1 au centre de la première roue R1 à une pluralité d'instants successifs ;

212/ calcul d'une première fonction à partir des mesures effectuées à la sous-étape 211/,

213/ mesures de la seconde accélération verticale Ar2 au centre de la seconde roue R2 à une pluralité d'instants successifs ;

214/ calcul d'une seconde fonction à partir des mesures effectuées à la sous-étape 213/,

215/ estimation de la variation relative des raideurs verticales Kp1 et Kp2 des premier et second pneus Pn1 et Pn2 l'une par rapport à l'autre, en fonction des résultats des calculs des étapes 212/ et 214/ à l'aide de tables et/ou de cartographies prédéterminées,

Les mesures des sous-étapes 211/ et 213/ sont effectuées avec une période prédéterminée T. Les valeurs mesurées sont stockées dans une mémoire tampon.

Les première et seconde fonctions sont les fonctions d'auto-corrélation X et X' respectivement des première et seconde accélérations verticales Ar1 et Ar2, calculées pour une durée glissante égale à M x T, avec M entier. Ces fonctions sont définies plus haut.

On a vu plus haut que, en utilisant le formalisme du modèle linéaire :

```
Zs1(p) = Ar1(p) / (H'11(p) x Kp1)


Zs2(p) = Ar2(p) / (H'12(p) x Kp2)
```

On sait également que l'auto-corrélation de deux fonctions décalées dans le temps, comme Zs1(p) et Zs2(p), est la même.

On en déduit que :

```
X' = K x Kp2/Kp1 x X où K est une constante.
```

où K est une constante.

Comme le montre la figure 10, on va donc, à l'étape 215/, déterminer à chaque instant successif les maxima des fonctions d'auto-corrélation X et X' sur un intervalle de temps glissant de durée prédéterminée, et calculer le ratio Y de ces maxima.

On détermine ensuite l'écart relatif des raideurs verticales Kp1 et Kp2 des premier et second pneus Pn1 et Pn2 l'une par rapport à l'autre en fonction du ratio Y à l'aide d'une cartographie prédéterminée. Cette cartographie est établie par simulation, en considérant que les premier et second pneus sont normalement à des pressions de référence, par exemple 2,0 bars à l'avant et 2,3 bars à l'arrière. La cartographie est ensuite validée expérimentalement. On obtient ainsi un indicateur de Kp.

A la deuxième étape, cet écart relatif de raideurs verticales est traduit en écart de pression, en utilisant les cartographies décrites dans le cadre du premier mode de réalisation.

Ce troisième mode de réalisation permet donc de détecter que la pression d'un pneu du véhicule a varié et d'identifier de quel côté du véhicule se trouve le pneu. Il ne permet pas d'identifier le pneu en question, ni de déterminer si ce pneu est le pneu avant ou le pneu arrière.

On notera que dans ce troisième mode de réalisation, la fonction d'auto-corrélation peut être remplacée par la variance pour le calcul des raideurs verticales des pneus.

Dans une variante de ce troisième mode de réalisation, on peut déterminer si la roue dont la pression a varié est à l'avant ou à l'arrière.

On fait ici l'hypothèse que les roues avant droite et gauche et que les roues arrière droite et gauche subissent, au sens stochastique, la même distribution d'accélération verticale au centre roue. Si la pression de l'un des deux pneus varie, ces roues ne subiront plus la même distribution d'accélération.

On applique alors le troisième mode de réalisation de la méthode à chacun des deux côtés du véhicule, et on effectue, en plus, une comparaison entre les fonctions X des deux roues avant, et une comparaison entre les fonction X des deux roues arrière.

On a vu ci-dessus que le troisième mode de réalisation de l'invention permettait de détecter si, d'un côté du véhicule, la pression d'un des deux pneus relativement à l'autre avait varié.

Une fois le côté identifié, on détermine si les fonctions X des deux pneus avant ont évolué de la même manière. Si on détecte une différence, le pneu dont la pression a varié est le pneu avant du côté incriminé. Si aucune différence n'est détectée, on compare les fonctions X des deux pneus arrière. Si on détecte une différence, le pneu dont la pression a varié est le pneu arrière du côté incriminé.

La méthode d'évaluation de la pression est destinée à être appliquée à un véhicule automobile comprenant quatre pneus, un dispositif de surveillance de la pression des pneus apte à mettre en oeuvre la méthode d'évaluation décrite ci-dessus, et des moyens d'avertissement du conducteur activés par le dispositif de surveillance quand la pression d'un des pneus sort d'une fourchette prédéterminée.

Les moyens d'avertissement peuvent être sonores ou visuels.

Quand le véhicule comprend un dispositif de pilotage d'au moins un organe du véhicule, tel que la suspension ou le dispositif de freinage, ce dispositif pilote ledit organe en fonction de la pression, ou de la variation de pression, estimée par le dispositif de surveillance.

Par ailleurs, le véhicule comprend de préférence un capteur d'angle du volant, le dispositif de surveillance de la pression étant inhibé quand l'angle du volant sort d'une plage prédéterminée.

De même, le véhicule comprend de préférence un capteur d'accélération mesurant les accélérations longitudinale et transversale du véhicule, le dispositif de surveillance de la pression étant inhibé quand l'accélération sort d'une plage prédéterminée.

En effet, les cartographies utilisées à l'étape 2/ ne sont pas valables pour de fortes accélérations transversales, ni pour de fortes accélérations longitudinales.

On notera enfin que les algorithmes de calcul décrits précédemment peuvent être adaptés pour que la grandeur mesurée ne soit pas l'accélération verticale Ar au centre roue mais plutôt le débattement relatif roue-caisse Zrel, ou encore la vitesse de débattement relatif roue-caisse Vrel.

Il est à noter que les différentes étapes et sous-étapes des modes de réalisation décrits ci-dessus ont été décomposées dans un souci d'explication et de bonne compréhension de la méthode. Dans la pratique, certaines étapes et sous-étapes peuvent être regroupées.

On peut ainsi, dans le second mode de réalisation, regrouper les sous-étapes 12/ et 13/ et calculer directement la seconde accélération Âr2 à partir de Ar1 sans estimer formellement Zs. Les équations utilisées sont alors légèrement différentes et peuvent typiquement prendre la forme :

$$Ar1(p) = \frac{N(p)}{D(p)} . Ar2(p).e^{-Td}$$

où N (p) et D (p) sont des termes que l'homme du métier peut facilement calculer à partir des équations données plus haut et où Td est le retard entre les roues avant et arrière R1 et R2.

On peut regrouper de même les sous-étapes 16/ et 17/. Dans le premier mode de réalisation, il est possible de regrouper les calculs élémentaires de façon différente.

On comprend donc bien que la méthode de l'invention est particulièrement avantageuse, puisqu'elle permet de surveiller la pression des pneus de façon simple' et économique. L'instrumentation nécessaire est limitée à un simple capteur d'accélération verticale au centre roue.

**Revendications**

1.  Méthode d'évaluation de la pression d'au moins un pneu (Pn, Pn1, Pn2) monté sur une roue ($R_o$, $R_1$, $R_2$) d'un véhicule automobile, ce véhicule comprenant au moins une caisse (C), la roue ($R_o$, $R_1$, $R_2$) étant liée à la caisse (C) par une suspension, ladite méthode comprenant les étapes suivantes:

    1/ estimation de la raideur verticale dudit pneu ou de la variation de la raideur verticale (Kp, Kp1, Kp2) dudit pneu par rapport aux autres à partir d'au moins une grandeur (Ar, Ar1, Ar2) mesurée par au moins un capteur équipant le véhicule;
    2/ estimation de la pression ou de la variation de pression (P) dudit pneu (Pn, Pn1, Pn2) à l'aide de tables et/ou de cartographies prédéterminées, bi- ou multidimensionnelles, donnant la pression ou la variation de pression (P) du pneu (Pn, Pn1, Pn2) en fonction de la raideur verticale ou de la variation de raideur verticale (Kp, Kp1, Kp2) du pneu estimée à l'étape 1/ et éventuellement d'autres paramètres,
    **caractérisée en ce que** la raideur verticale ou la variation de raideur verticale (Kp, Kp1, Kp2) du pneu est estimée au moins à partir de l'accélération verticale (Ar, Ar1, Ar2) au centre de la roue ($R_o$, $R_1$, $R_2$).
    et **en ce que** l'étape 1/ comprend une sous-étape consistant à estimer le profil d'altitude (Zs, Zs1, Zs2) du sol le long de la trajectoire de la roue ($R_o$, $R_1$, $R_2$) à partir de l'accélération verticale (Ar, Ar1, Ar2) au centre de la roue ($R_o$, $R_1$, R2).

2.  Méthode selon la revendication 1, **caractérisée en ce qu'**elle est adaptée à un véhicule comprenant au moins des premier et second pneus (Pn1, Pn2) montés sur des première et seconde roues (R1, R2) alignées l'une derrière l'autre, et **en ce que** l'étape 1/ comprend au moins les sous-étapes suivantes :

    11/ mesure de la première accélération verticale (Ar1) au centre de la première roue (R1) ;
    12/ estimation de l'altitude du sol (Zs1) sous la première roue (R1) à partir de la première accélération verticale (Ar1) mesurée à l'étape 11/ ;
    13/ estimation de la seconde accélération verticale (Âr2) au centre de la seconde roue (R2) à partir de l'altitude du sol (Zs1) sous la première roue (R1) estimée à l'étape 12/ ;
    14/ mesure de la seconde accélération verticale (Ar2) au centre de la seconde roue (R2) ;
    15/ estimation de la seconde raideur verticale (Kp2) du second pneu (Pn2) par réconciliation de l'estimation de la seconde accélération verticale (Âr2) obtenue à la sous-étape 13/ et de la mesure de la seconde accélération verticale (Ar2) obtenue à la sous-étape 14/.

3. Méthode selon la revendication 2, **caractérisée en ce que** la réconciliation de la sous-étape 15/ est effectuée en échantillonnant avec une période prédéterminée l'estimation de la seconde accélération verticale (Âr2) et la mesure de la seconde accélération verticale (Ar2), en calculant les fonctions d'autocorrélation de l'estimation de la seconde accélération verticale (Âr2) et de la mesure de la seconde accélération verticale (Ar2) sur une durée d'observation glissante prédéterminée, et en déterminant pour chaque période la valeur de la seconde raideur verticale (Kp2) qui permet de minimiser l'écart entre les deux fonctions d'auto-corrélation .

4. Méthode selon la revendication 2 ou 3,
**caractérisée en ce qu'**elle comprend une sous-étape 12'/ de temporisation entre les sous-étapes 12/ et 13/.

5. Méthode selon l'une quelconque des revendications 2 à 4, **caractérisée en ce qu'**elle comprend en outre les sous-étapes suivantes :

16/ estimation de l'altitude du sol (Zs2) sous la seconde roue (R2) à partir de la seconde accélération verticale (Ar2) au centre de la seconde roue (R2) mesurée à l'étape 14/ ;
17/ estimation de la première accélération verticale (Âr1) au centre de la première roue (R1) à partir de l'altitude du sol (Zs2) sous la seconde roue (R2) estimée à l'étape 16/ ;
18/ estimation de la première raideur verticale (Kp1) du premier pneu (Pn1) par réconciliation de l'estimation de la première accélération verticale (Âr1) obtenue à la sous-étape 17/ et de la mesure de la première accélération verticale (Ar1) obtenue à la sous-étape 11/.

6. Méthode selon la revendication 5, **caractérisée en ce que** l'estimation de la première raideur verticale (Kp1) obtenue à la sous-étape 18/ est utilisée à la sous-étape 12/, l'estimation de la seconde raideur verticale (Kp2) obtenue à la sous-étape 15/ étant utilisée à la sous-étape 16/.

7. Méthode selon la revendication 5 ou 6,
**caractérisée en ce que** les sous-étapes 12/, 13/, 16/ et 17/ sont effectuées à l'aide d'un modèle linéaire ou non linéaire à deux degrés de liberté modélisant les interactions entre le sol, la roue (R1, R2) et la caisse (C) du véhicule.

8. Méthode selon la revendication 1 **caractérisée en ce que** le véhicule automobile comprend au moins une autre roue, la raideur verticale (Kp) du pneu étant estimée sans utiliser de grandeurs caractérisant le comportement de la ou des autres roues.

9. Méthode selon la revendication 8, **caractérisée en ce que** l'étape 1/ comprend au moins les sous-étapes suivantes :

111/ mesure de l'accélération verticale (Ar) au centre de la roue ($R_o$),
112/ estimation du profil d'altitude (Zs) du sol le long de la trajectoire de la roue ($R_o$) à partir de l'accélération verticale (Ar) au centre de la roue ($R_o$) mesurée à la sous-étape 111/,
113/ estimation de l'altitude roue (Zr) au centre de la roue ($R_o$) à partir de l'accélération verticale (Ar) au centre de la roue ($R_o$) mesurée à la sous-étape 111/,
114/ estimation de l'effort du pneu ($\sum F$) à partir de l'accélération verticale (Ar) au centre de la roue ($R_o$) mesurée à la sous-étape 111/,
115/ estimation de la raideur verticale (Kp) du pneu (Pn) à partir du profil d'altitude du sol (Zs) estimé à l'étape 112/, de l'altitude roue (Zr) estimée à l'étape 113/ et de l'effort pneu ($\sum F$) estimé à la sous-étape 114/.

10. Méthode selon la revendication 9, **caractérisée en ce que** la raideur verticale (Kp) estimée à la sous-étape 115 est utilisée à la soue-étape 112/.

11. Méthode selon la revendication 9 ou 10,
**caractérisée en ce que** les sous-étapes 112/, 113/, 114/ et 115/ sont effectuées à l'aide d'un modèle linéaire ou non linéaire à deux degrés de liberté modélisant les interactions entre le sol, la roue ($R_o$) et la caisse (C) du véhicule.

12. Méthode selon l'une quelconque des revendications 1 à 11, **caractérisée en ce que** le profil d'altitude du sol (Zs) est estimé également à partir de l'accélération verticale caisse (Ac) de la caisse (C), cette accélération verticale caisse (Ac) étant mesurée.

13. Méthode, selon l'une quelconque des revendication précédentes **caractérisée en ce que** le profil d'altitude du sol (Zs) est estimé également à partir de l'accélération verticale caisse (Ac) de la caisse (C), cette accélération verticale caisse (Ac) étant estimée à partir de l'accélération verticale (Ar) au centre de la roue ($R_o$).

14. Méthode selon l'une quelconque des revendications précédentes, **caractérisée en ce que** la raideur verticale (Kp) du pneu (Pn) est estimée à partir de la mesure du débattement relatif roue - caisse (Zrel), et/ou de la vitesse de débattement relatif roue - caisse (Vrel).

15. Méthode selon revendication 1, **caractérisée en ce qu'**elle est adaptée à un véhicule comprenant au moins des premier et second pneus (Pn1, Pn2) montés sur des première et seconde roues (R1, R2) alignées l'une derrière l'autre, et **en ce que** l'étape 1/ comprend au moins les sous-étapes suivantes :

> 211/ mesures de la première accélération verticale (Ar1) au centre de la première roue (R1) à une pluralité d'instants successifs ;
> 212/ calcul d'une première fonction (X) à partir des mesures effectuées à la sous-étape 211/,
> 213/ mesures de la seconde accélération verticale (Ar2) au centre de la seconde roue (R2) à une pluralité d'instants successifs ;
> 214/ calcul d'une seconde fonction (X') à partir des mesures effectuées à la sous-étape 213/,
> 215/ estimation de la variation relative des raideurs verticales (Kp1, Kp2) des premier et second pneus (Pn1, Pn2) l'une par rapport à l'autre en fonction des résultats des calculs des étapes 212/ et 214/ à l'aide de tables et/ou de cartographies prédéterminées.

16. Méthode selon l'une quelconque des revendications précédentes, **caractérisée en ce que** la pression ou la différence de pression (P) du pneu (Pn, Pn1, Pn2) est estimée à l'étape 2/ également en fonction de la température ambiante (T) et/ou de la vitesse du véhicule (V).

17. Véhicule automobile comprenant au moins un pneu, un dispositif de surveillance de la pression dudit pneu apte à mettre en oeuvre la méthode d'évaluation de l'une quelconque des revendications précédentes, des moyens d'avertissement du conducteur activés par le dispositif de surveillance quand la pression du pneu sort d'une fourchette prédéterminée et/ou des moyens d'affichage de la pression du pneu.

18. Véhicule selon la revendication 17, **caractérisé e**n ce qu'il comprend un dispositif de pilotage d'au moins un organe du véhicule, tel que la suspension ou le dispositif de freinage, ce dispositif pilotant ledit organe en fonction de la pression estimée par le dispositif de surveillance.

19. Véhicule selon la revendication 17 ou 18, **caractérisé en ce qu'**il comprend un capteur d'angle du volant, le dispositif de surveillance de la pression étant inhibé quand l'angle du volant sort d'une plage prédéterminée.

20. Véhicule selon l'une quelconque des revendications 17 à 19 **caractérisé en ce qu'**il comprend un capteur d'accélération, le dispositif de surveillance de la pression étant inhibé quand l'accélération sort d'une plage prédéterminée.

21. Méthode selon l'une quelconque des revendications 8 à 12, **caractérisée en ce qu'**elle comprend une sous-étape 116/ d'estimation de l'accélération verticale caisse (Ac) à partir de l'accélération verticale roue (Ar), à l'aide de tables et/ou de cartographies prédéterminées caractérisant le comportement de la suspension.

**Claims**

1. Method of evaluating the pressure of at least one tyre (Pn, Pn1, Pn2) fitted to a wheel ($R_o$, R1, R2) of a motor vehicle, this vehicle comprising at least one body (C), the wheel ($R_o$, R1, R2) being connected to the body (C) by a suspension, the said method comprising the following steps:

> 1/ estimating the vertical stiffness of the said tyre or the variation in the vertical stiffness (Kp, Kp1 Kp2) of the said tyre with respect to the other tyres from at least one variable (Ar, Ar1, Ar2) measured by at least one sensor with which the vehicle is equipped;
> 2/ estimating the pressure or the variation in pressure (P) of the said tyre (Pn, Pn1, Pn2) with the aid of predetermined two-dimensional or multidimensional tables and/or mappings giving the pressure or the variation in pressure (P) of the tyre (Pn, Pn1, Pn2) as a function of the vertical stiffness or the variation in vertical stiffness (Kp, Kp1 Kp2) of the tyre estimated at step 1/ and, if appropriate, as a function of other parameters, **characterized in that** the vertical stiffness or the variation in vertical stiffness (Kp, Kp1 Kp2) of the tyre is estimated at least from the vertical acceleration (Ar, Ar1, Ar2) at the centre of the wheel ($R_o$, R1, R2), and **in that** step 1/ comprises a substep consisting in estimating the altitude profile (Zs, Zs1, Zs2) of the ground along the path of the wheel ($R_o$, R1, R2) from the vertical acceleration (Ar, Ar1, Ar2) at the centre of the wheel ($R_o$, R1, R2).

2. Method according to Claim 1, **characterized in that** it is adapted to a vehicle comprising at least first and second tyres (Pn1, Pn2) fitted to first and second wheels (R1, R2) aligned one behind the other, and **in that** step 1/ comprises at least the following substeps:

> 11/ measuring the first vertical acceleration (Ar1) at the centre of the first wheel (R1);
> 12/ estimating the altitude of the ground (Zs1) below the first wheel (R1) from the first vertical acceleration (Ar1) measured at step 11/;
> 13/ estimating the second vertical acceleration (Âr2) at the centre of the second wheel (R2) from the altitude of the ground (Zs1) below the first wheel (R1) estimated at step 12/;
> 14/ measuring the second vertical acceleration (Ar2) at the centre of the second wheel (R2);
> 15/ estimating the second vertical stiffness (Kp2) of the second tyre (Pn2) by reconciliation of the estimation of the second vertical acceleration (Âr2) obtained at substep 13/ with the measurement of the second vertical acceleration (Ar2) obtained at substep 14/.

3. Method according to Claim 2, **characterized in that** the reconciliation in substep 15/ is performed by sampling, with a predetermined period, the estimation of the second vertical acceleration (Âr2) and the measurement of the second vertical acceleration (Ar2), by calculating the autocorrelation functions for autocorrelation between the estimation of the second vertical acceleration (Âr2) and the measurement of the second vertical acceleration (Ar2) over a predetermined sliding observation duration, and by determining for each period the value of the second vertical stiffness (Kp2) that makes it possible to minimize the difference between the two autocorrelation functions.

4. Method according to Claim 2 or 3, **characterized in that** it comprises a substep 12'/ involving a time delay between substeps 12/ and 13/.

5. Method according to any one of Claims 2 to 4, **characterized in that** it additionally comprises the following substeps:

> 16/ estimating the altitude of the ground (Zs2) below the second wheel (R2) from the second vertical acceleration (Ar2) at the centre of the second wheel (R2) measured at step 14/;
> 17/ estimating the first vertical acceleration (Âr1) at the centre of the first wheel (R1) from the altitude of the ground (Zs2) below the second wheel (R2) estimated at step 16/;
> 18/ estimating the first vertical stiffness (Kp1) of the first tyre (Pn1) by reconciliation of the estimation of the first vertical acceleration (Âr1) obtained at substep 17/ with the measurement of the first vertical acceleration (Ar1) obtained at substep 11/.

6. Method according to Claim 5, **characterized in that** the estimation of the first vertical stiffness (Kp1) obtained at substep 18/ is used at substep 12/, the estimation of the second vertical stiffness (Kp2) obtained at substep 15/ being used at substep 16/.

7. Method according to Claim 5 or 6, **characterized in that** substeps 12/, 13/, 16/ and 17/ are performed with the aid of a linear or non-linear model with two degrees of freedom that models the interactions between the ground, the wheel (R1, R2) and the body (C) of the vehicle.

8. Method according to Claim 1, **characterized in that** the motor vehicle comprises at least one other wheel, the vertical stiffness (Kp) of the tyre being estimated without using variables characterizing the behaviour of the wheel or of the other wheels.

9. Method according to Claim 8, **characterized in that** step 1/ comprises at least the following substeps:

> 111/ measuring the vertical acceleration (Ar) at the centre of the wheel ($R_o$),

112/ estimating the altitude profile (Zs) of the ground along the path of the wheel ($R_o$) from the vertical acceleration (Ar) at the centre of the wheel ($R_o$) measured at substep 111/,

113/ estimating the wheel altitude (Zr) at the centre of the wheel ($R_o$) from the vertical acceleration (Ar) at the centre of the wheel ($R_o$) measured at substep 111/,

114/ estimating the force of the tyre ($\Sigma F$) from the vertical acceleration (Ar) at the centre of the wheel ($R_o$) measured at substep 111/,

115/ estimating the vertical stiffness (Kp) of the tyre (Pn) from the altitude profile of the ground (Zs) estimated at step 112/, from the wheel altitude (Zr) estimated at step 113/, and from the tyre force ($\Sigma F$) estimated at substep 114/.

**10.** Method according to Claim 9, **characterized in that** the vertical stiffness (Kp) estimated at substep 115/ is used at substep 112/.

**11.** Method according to Claim 9 or 10, **characterized in that** substeps 112/, 113/, 114/ and 115/ are performed with the aid of a linear or non-linear model with two degrees of freedom that models the interactions between the ground, the wheel ($R_o$) and the body (C) of the vehicle.

**12.** Method according to any one of Claims 1 to 11, **characterized in that** the altitude profile of the ground (Zs) is likewise estimated from the vertical body acceleration (Ac) of the body (C), this vertical body acceleration (Ac) being measured.

**13.** Method according to any one of the preceding claims, **characterized in that** the altitude profile of the ground (Zs) is likewise estimated from the vertical body acceleration (Ac) of the body (C), this vertical body acceleration (Ac) being estimated from the vertical acceleration (Ar) at the centre of the wheel ($R_o$).

**14.** Method according to any one of the preceding claims, **characterized in that** the vertical stiffness (Kp) of the tyre (Pn) is estimated from the measurement of the relative wheel-body deflection (Zrel), and/or from the speed of relative wheel-body deflection (Vrel).

**15.** Method according to Claim 1, **characterized in that** it is adapted to a vehicle comprising at least first and second tyres (Pn1, Pn2) fitted to first and second wheels (R1, R2) aligned one behind the other, and **in that** step 1/ comprises at least the following substeps:

211/ measurements of the first vertical acceleration (Ar1) at the centre of the first wheel (R1) at a plurality of successive times;

212/ calculating a first function (X) from the measurements performed at substep 211/;

213/ measurements of the second vertical acceleration (Ar2) at the centre of the second wheel (R2) at a plurality of successive times;

214/ calculating a second function (X') from the measurements performed at substep 213/;

215/ estimating the relative variation in the vertical stiffnesses (Kp1, Kp2) of the first and second tyres (Pn1, Pn2) with respect to one another as a function of the results of the calculations in steps 212/ and 214/ with the aid of predetermined tables and/or mappings.

**16.** Method according to any one of the preceding claims, **characterized in that** the pressure or the difference in pressure (P) of the tyre (Pn, Pn1, Pn2) is estimated at step 2/ likewise as a function of the ambient temperature (T) and/or the speed of the vehicle (V).

**17.** Motor vehicle comprising at least one tyre, a device for monitoring the pressure of the said tyre that is suitable for implementing the evaluation method of any one of the preceding claims, means for warning the driver that are activated by the monitoring device when the pressure of the tyre goes outside a predetermined range and/or means for displaying the pressure of the tyre.

**18.** Vehicle according to Claim 17, **characterized in that** it comprises a device for controlling at least one component of the vehicle, such as the suspension or the braking device, this device controlling the said component as a function of the pressure estimated by the monitoring device.

**19.** Vehicle according to Claim 17 or 18, **characterized in that** it comprises a steering wheel angle sensor, the pressure monitoring device being inhibited when the angle of the steering wheel goes outside a predetermined range.

**20.** Vehicle according to any one of Claims 17 to 19, **characterized in that** it comprises an acceleration sensor, the pressure monitoring device being inhibited when the acceleration goes outside a predetermined range.

**21.** Method according to any one of Claims 8 to 12, **characterized in that** it comprises a substep 116/ of estimating the vertical body acceleration (Ac) from the vertical wheel acceleration (Ar) with the aid of predetermined tables and/or mappings characterizing the behaviour of the suspension.

**Patentansprüche**

**1.** Verfahren zum Abschätzen des Drucks mindestens eines Reifens (Pn, Pn1, Pn2), der auf einem Rad (R$_o$, R1, R2) eines Kraftfahrzeugs angebracht ist, wobei dieses Fahrzeug mindestens einen Aufbau (C) umfasst, wobei das Rad (R$_o$, R1, R2) über eine Aufhängung mit dem Aufbau (C) verbunden ist, wobei das Verfahren folgende Schritte umfasst:

1) Abschätzen der Vertikalsteifigkeit des Reifens oder der Änderung der Vertikalsteifigkeit (Kp, Kp1 Kp2) des Reifens im Verhältnis zu den anderen, ausgehend von mindestens einer Größe (Ar, Ar1, Ar2), die von mindestens einem Sensor gemessen wird, mit dem das Fahrzeug ausgestattet ist;
2) Abschätzen des Drucks oder der Änderung des Drucks (P) des Reifens (Pn, Pn1, Pn2) mit Hilfe von vorherbestimmten zwei- oder mehrdimensionalen Tabellen und/oder Kennfeldern, die den Druck oder die Änderung des Drucks (P) des Reifens (Pn, Pn1, Pn2) je nach der Vertikalsteifigkeit oder der Änderung der Vertikalsteifigkeit (Kp, Kp1, Kp2) des Reifens, die in Schritt 1) abgeschätzt wurde, und eventuell nach anderen Parametern, angeben,
**dadurch gekennzeichnet, dass** die Vertikalsteifigkeit oder die Änderung der Vertikalsteifigkeit (Kp, Kp1, Kp2) des Reifens mindestens ausgehend von der Vertikalbeschleunigung (Ar, Ar1, Ar2) im Mittelpunkt des Rads (R$_o$, R1, R2) abgeschätzt wird,
und dass Schritt 1) einen Nebenschritt des Abschätzens des Höhenprofils (Zs, Zs1, Zs2) des Bodens an dem Weg des Rads (R$_o$, R1, R2) entlang, ausgehend von der Vertikalbeschleunigung (Ar, Ar1, Ar2) im Mittelpunkt des Rads (R$_o$, R1, R2) umfasst.

**2.** Verfahren nach Anspruch 1, **dadurch gekennzeichnet, dass** es für ein Fahrzeug geeignet ist, das mindestens erste und zweite Reifen (Pn1, Pn2) umfasst, die auf ersten und zweiten Rädern (R1, R2) angebracht sind, die hintereinander aufgestellt sind, und dass Schritt 1) mindestens die folgenden Nebenschritte umfasst:

11) Messen der ersten Vertikalbeschleunigung (Ar1) im Mittelpunkt des ersten Rads (R1);
12) Abschätzen der Höhe des Bodens (Zs1) unter dem ersten Rad (R1) ausgehend von der ersten Vertikalbeschleunigung (Ar1), die in Schritt 11) gemessen wurde;
13) Abschätzen der zweiten Vertikalbeschleunigung (Âr2) im Mittelpunkt des zweiten Rads (R2) ausgehend von der Höhe des Bodens (Zs1) unter dem ersten Rad (R1), die in Schritt 12) abgeschätzt wurde;
14) Messen der zweiten Vertikalbeschleunigung (Ar2) im Mittelpunkt des zweiten Rads (R2);
15) Abschätzen der zweiten Vertikalsteifigkeit (Kp2) des zweiten Reifens (Pn2) durch in Einklang Bringen der Schätzung der zweiten Vertikalbeschleunigung (Âr2), die im Nebenschritt 13) erzielt wurde, und der Messung der zweiten Vertikalbeschleunigung (Ar2), die im Nebenschritt 14) erzielt wurde.

**3.** Verfahren nach Anspruch 2, **dadurch gekennzeichnet, dass** das in Einklang Bringen des Nebenschritts 15) durchgeführt wird, indem mit einem vorherbestimmten Zeitintervall die Schätzung der zweiten Vertikalbeschleunigung (Âr2) und die Messung der zweiten Vertikalbeschleunigung (Ar2) abgetastet werden, indem die Autokorrelationsfunktionen der Schätzung der zweiten Vertikalbeschleunigung (Âr2) und der Messung der zweiten Vertikalbeschleunigung (Ar2) über eine vorherbestimmte gleitende Beobachtungsdauer berechnet werden, und indem für jedes Zeitintervall der Wert der zweiten Vertikalsteifigkeit (Kp2) bestimmt wird, der es ermöglicht, die Abweichung zwischen den beiden Autokorrelationsfunktionen zu minimieren.

**4.** Verfahren nach Anspruch 2 oder 3, **dadurch gekennzeichnet, dass** es einen Nebenschritt 12') der Verzögerung zwischen den Nebenschritten 12) und 13) umfasst.

**5.** Verfahren nach einem der Ansprüche 2 bis 4, **dadurch gekennzeichnet, dass** es ferner die folgenden Nebenschritte umfasst:

16) Abschätzen der Höhe des Bodens (Zs2) unter dem zweiten Rad (R2) ausgehend von der zweiten Vertikal-

**EP 1 502 775 B1**

beschleunigung (Ar2) im Mittelpunkt des zweiten Rads (R2), die in Schritt 14) gemessen wurde;

17) Abschätzen der ersten Vertikalbeschleunigung (Âr1) im Mittelpunkt des ersten Rads (R1) ausgehend von der Höhe des Bodens (Zs2) unter dem zweiten Rad (R2), die in Schritt 16) geschätzt wurde;

18) Abschätzen der ersten Vertikalsteifigkeit (Kp1) des ersten Reifens (Pn1) durch in Einklang Bringen der Schätzung der ersten Vertikalbeschleunigung (Âr1), die in Nebenschritt 17) erzielt wurde, und der Messung der ersten Vertikalbeschleunigung (Ar1), die in Nebenschritt 11) erzielt wurde.

6. Verfahren nach Anspruch 5, **dadurch gekennzeichnet, dass** die Schätzung der ersten Vertikalsteifigkeit (Kp1), die in Nebenschritt 18) erzielt wurde, in Nebenschritt 12) verwendet wird, wobei die Schätzung der zweiten Vertikalsteifigkeit (Kp2), die in Nebenschritt 15) erzielt wurde, in Nebenschritt 16) verwendet wird.

7. Verfahren nach Anspruch 5 oder 6, **dadurch gekennzeichnet, dass** die Nebenschritte 12), 13), 16) und 17) anhand eines linearen oder nichtlinearen Modells mit zwei Freiheitsgraden, das die Wechselwirkungen zwischen dem Boden, dem Rad (R1, R2) und dem Aufbau (C) des Fahrzeugs modelliert, ausgeführt werden.

8. Verfahren nach Anspruch 1, **dadurch gekennzeichnet, dass** das Kraftfahrzeug mindestens ein anderes Rad umfasst, wobei die Vertikalsteifigkeit (Kp) des Reifens abgeschätzt wird, ohne Größen zu verwenden, die das Verhalten des bzw. der anderen Räder kennzeichnen.

9. Verfahren nach Anspruch 8, **dadurch gekennzeichnet, dass** Schritt 1) mindestens die folgenden Nebenschritte umfasst:

111) Messen der Vertikalbeschleunigung (Ar) im Mittelpunkt des Rads ($R_o$),

112) Abschätzen des Höhenprofils (Zs) des Bodens am Weg des Rads ($R_o$) entlang, ausgehend von der Vertikalbeschleunigung (Ar) im Mittelpunkt des Rads ($R_o$), die in Nebenschritt 111) gemessen wurde,

113) Abschätzen der Radhöhe (Zr) im Mittelpunkt des Rads ($R_o$) ausgehend von der Vertikalbeschleunigung (Ar) im Mittelpunkt des Rads ($R_o$), die in Nebenschritt 111) gemessen wurde,

114) Abschätzen der Beanspruchung des Reifens ($\sum F$) ausgehend von der Vertikalbeschleunigung (Ar) im Mittelpunkt des Rads ($R_o$), die in Nebenschritt 111) gemessen wurde,

115) Abschätzen der Vertikalsteifigkeit (Kp) des Reifens (Pn) ausgehend von dem Höhenprofil des Bodens (Zs), das in Schritt 112) geschätzt wurde, von der Radhöhe (Zr), die in Schritt 113) geschätzt wurde, und von der Reifenbeanspruchung ($\sum F$), die in Nebenschritt 114) geschätzt wurde.

10. Verfahren nach Anspruch 9, **dadurch gekennzeichnet, dass** die Vertikalsteifigkeit (Kp), die in Nebenschritt 115) geschätzt wurde, in Nebenschritt 112) verwendet wird.

11. Verfahren nach Anspruch 9 oder 10, **dadurch gekennzeichnet, dass** die Nebenschritte 112), 113), 114) und 115) anhand eines linearen oder nichtlinearen Modells mit zwei Freiheitsgraden, das die Wechselwirkungen zwischen dem Boden, dem Rad ($R_o$) und dem Aufbau (C) des Fahrzeugs modelliert, ausgeführt werden.

12. Verfahren nach einem der Ansprüche 1 bis 11,
**dadurch gekennzeichnet, dass** das Höhenprofil des Bodens (Zs) auch ausgehend von der senkrechten Aufbaubeschleunigung (Ac) des Aufbaus (C) geschätzt wird, wobei diese senkrechte Aufbaubeschleunigung (Ac) gemessen wird.

13. Verfahren nach einem der vorhergehenden Ansprüche,
**dadurch gekennzeichnet, dass** das Höhenprofil des Bodens (Zs) auch ausgehend von der senkrechten Aufbaubeschleunigung (Ac) des Aufbaus (C) geschätzt wird, wobei diese senkrechte Aufbaubeschleunigung (Ac) ausgehend von der Vertikalbeschleunigung (Ar) im Mittelpunkt des Rads ($R_o$) geschätzt wird.

14. Verfahren nach einem der vorhergehenden Ansprüche,
**dadurch gekennzeichnet, dass** die Vertikalsteifigkeit (Kp) des Reifens (Pn) ausgehend von der Messung der relativen Ausfederung Rad/Aufbau (Zrel) und/oder von der relativen Ausfederungsgeschwindigkeit Rad/Aufbau (Vrel) geschätzt wird.

15. Verfahren nach Anspruch 1, **dadurch gekennzeichnet, dass** es für ein Fahrzeug geeignet ist, das mindestens erste und zweite Reifen (Pn1, Pn2) umfasst, die auf ersten und zweiten Rädern (R1, R2) angebracht sind, die hintereinander aufgestellt sind, und dass Schritt 1) mindestens die folgenden Nebenschritte umfasst:

211) Messen der ersten Vertikalbeschleunigung (Ar1) im Mittelpunkt des ersten Rads (R1) zu einer Vielzahl von aufeinander folgenden Zeitpunkten;

212) Berechnen einer ersten Funktion (X) ausgehend von den Messungen, die in Nebenschritt 211) ausgeführt wurden;

213) Messen der zweiten Vertikalbeschleunigung (Ar2) im Mittelpunkt des zweiten Rads (R2) zu einer Vielzahl von aufeinander folgenden Zeitpunkten;

214) Berechnen einer zweiten Funktion (X') ausgehend von den Messungen, die in Nebenschritt 213) ausgeführt wurden;

215) Abschätzen der relativen Änderung der Vertikalsteifigkeiten (Kp1, Kp2) der ersten und zweiten Reifen (Pn1, Pn2) zueinander, in Abhängigkeit von den Ergebnissen der Berechnungen der Schritte 212) und 214) anhand von vorherbestimmten Tabellen und/oder Kennfeldern.

16. Verfahren nach einem der vorhergehenden Ansprüche,
**dadurch gekennzeichnet, dass** der Druck oder der Druckunterschied (P) des Reifens (Pn, Pn1, Pn2) in Schritt 2) ebenfalls in Abhängigkeit von der Umgebungstemperatur (T) und/oder der Fahrzeuggeschwindigkeit (V) geschätzt wird.

17. Kraftfahrzeug, umfassend mindestens einen Reifen, eine Vorrichtung zur Überwachung des Reifendrucks, die dazu geeignet ist, das Schätzungsverfahren nach einem der vorhergehenden Ansprüche durchzuführen, Mittel zur Benachrichtigung des Fahrers, die durch die Überwachungsvorrichtung aktiviert werden, wenn der Reifendruck einen vorherbestimmten Bereich verlässt, und/oder Mittel zum Anzeigen des Reifendrucks.

18. Fahrzeug nach Anspruch 17, **dadurch gekennzeichnet, dass** es eine Vorrichtung zum Ansteuern mindestens eines Organs des Fahrzeugs umfasst, wie etwa der Aufhängung oder der Bremsvorrichtung, wobei diese Vorrichtung das Organ in Abhängigkeit von dem durch die Überwachungsvorrichtung geschätzten Druck ansteuert.

19. Fahrzeug nach Anspruch 17 oder 18, **dadurch gekennzeichnet, dass** es einen Lenkradwinkelsensor umfasst, wobei die Drucküberwachungsvorrichtung gesperrt ist, wenn der Lenkradwinkel einen vorherbestimmten Bereich verlässt.

20. Fahrzeug nach einem der Ansprüche 17 bis 19,
**dadurch gekennzeichnet, dass** es einen Beschleunigungssensor umfasst, wobei die Drucküberwachungsvorrichtung gesperrt ist, wenn die Beschleunigung einen vorherbestimmten Bereich verlässt.

21. Verfahren nach einem der Ansprüche 8 bis 12,
**dadurch gekennzeichnet, dass** es einen Nebenschritt 116) des Abschätzens der senkrechten Aufbaubeschleunigung (Ac) umfasst, ausgehend von der senkrechten Radbeschleunigung (Ar), anhand von vorherbestimmten Tabellen und/oder Kennfeldern, die das Verhalten der Aufhängung kennzeichnen.

## Fig. 1

## Fig. 2

## Fig. 3A

**Fig. 3 B**

Ar — Mr — + + ← Fc — Mc ← $\hat{A}_c$ — 116/

+ + — $1/K_p$ — Kp 115/ — Zr 113/ — + + — Zs

Ar — Mr — + + — ΣF
$\hat{A}_c$ — 116/ — Mc — Fc

**Fig. 3 C**

**Fig. 3 E**

**Fig. 3 D**

Ar — ∫ — Vr — ∫ — Zr

112/ — Zs — + − — 113/ — Zr — $1/(Z_s Z_r)$ — 114/ — ΣF — Kp

Ar — ∫ — Vr — ∫ — Zr — + + — Zs →
114/ — ΣF — $1/K_p$ — Kp — 115/

**Fig. 3 F**

**Fig. 4 A**

Ar(p) — $H_4(p)$ — $\hat{A}_c(p)$

**Fig. 4 B**

Ar(p) — $1/H_1'(p)$ — Kp 115/ — $1/K_p$ — Kp 115/ — Zs(p)

_Fig 5_

_Fig. 6A_

_Fig. 6 B_

_Fig. 7A_

_Fig. 7 B_

_Fig.8_

$\widehat{A}r2$ → | Tampon ⌈1:M⌉ | → | Auto Corrélation | X ● → | Critère de dècision | → Kp 2

$Ar2$ → | Tampon ⌈1:M⌉ | → | Auto Corrélation | X' ●

_Fig.9_

$Z_{s1}(p)$ → ▷ $H_3(p)$ → $\widehat{A}c(p)$ → | Critère de robustesse | → Indicateur de robustesse

$Ac(p)$ →

_Fig.10_

$Ar1$ → | Tampon ⌈1:M⌉ | → | Auto Corrélation | → | Max( ) | → | X / % | → | ∫ | → Indicateur de Kp

$Ar2$ → | Tampon ⌈1:M⌉ | → | Auto Corrélation | → | Max( ) |

$Ar$ → | | → Kp ● → | | → P ●

T°   V

_Fig.11_

**EP 1 502 775 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 4009540 A